# EUROPEAN PATENT SPECIFICATION

(11) **EP 3 014 497 B1**
(45) Date of publication and mention of the grant of the patent: **30.05.2018**
(21) Application number: 13887998.6
(22) Date of filing: 25.06.2013
(51) Int. Cl.: H04L 12/24, H04L 12/26, H04Q 11/00

(54) **METHOD AND APPARATUS OF PROCESSING FOR ALARM CLEARING**
VERFAHREN UND VORRICHTUNG ZUR VERARBEITUNG FÜR ALARMBESEITIGUNG
PROCÉDÉ ET APPAREIL DE TRAITEMENT POUR SUPPRESSION D'ALARME

(43) Date of publication of application: 04.05.2016
(73) Proprietor: Thomson Licensing, 92130 Issy-les-Moulineaux (FR)
(72) Inventor: XU, Tianwen, Beijing 100192 (CN); DU, Juan, Beijing 100192 (CN); XU, Hao, Beijing 100192 (CN)
(74) Representative: Huchet, Anne
(86) International application number: PCT/CN2013/077914
(87) International publication number: WO 2014/205656

(56) References cited:
- CN-A- 1 384 942
- CN-A- 101 541 021
- CN-A- 102 760 274
- US-A1- 2004 008 986
- US-A1- 2013 051 792
- US-B1- 7 475 299
- Wikipedia, the free encyclopedia: "Interrupt - Wikipedia", , 12 June 2013 (2013-06-12), XP055318139, Retrieved from the Internet: URL:https://en.wikipedia.org/w/index.php?t itle=Interrupt&oldid=559617828 [retrieved on 2016-11-10]
- Wikipedia, the free encyclopedia: "Polling (computer science) - Wikipedia", , 26 February 2013 (2013-02-26), XP055318182, Retrieved from the Internet: URL:https://en.wikipedia.org/w/index.php?t itle=Polling_(computer_science)&oldid=5406 60392 [retrieved on 2016-11-10]

## Description

### [TECHNICAL FIELD]

The present inventions relate generally to a method and an apparatus of processing for alarm clearing and, more particularly, to a method and an apparatus of processing for alarm clearing for optical network units.

### [BACKGROUND ART]

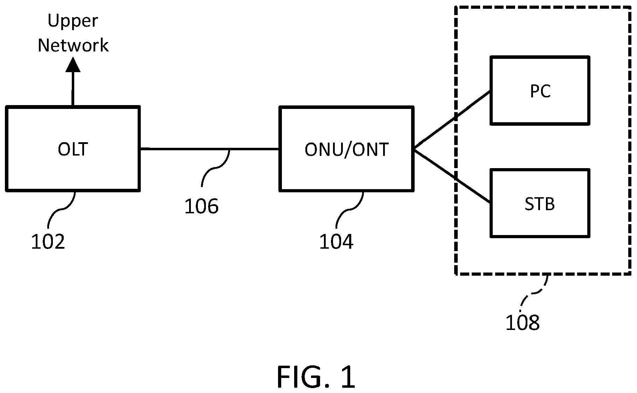

As for a passive optical network, Gigabit Passive Optical Network (GPON) was standardized by International Telecommunication Union, Telecommunication Sector (ITU-T). FIG. 1 shows a schematic configuration of a passive optical network. Referring to FIG. 1, an optical line terminator (OLT) 102 is connected to an upper optical network and is also connected to optical network units (ONU) 104 or optical network terminals (hereinafter "ONU") at subscribers' side via an optical line 106. The ONU 104 is connected to a terminal 108 (for example, a personal computer, set top box, etc.) of the subscribers. Such configuration enables the terminals 108 of the subscribers to communicate with terminals of other subscribers via upper optical networks.

ITU-T G984.4 and G988 defines that the ONU 104 shall report alarms and alarm clearings occurred in it to the OLT 102. The alarm is occurred when a value for one of parameters of a diagnostic monitoring program for a transceiver in the ONU 104 exceeds a predetermined threshold value. The alarm clearing is that the alarm is cleared when a real-time value of the parameter turns back to a normal value (for example, when a real-time value becomes lower than high threshold value). The parameters of the diagnostic monitoring program are temperature, supply voltage, received signal strength indication (RSSI) of received optical signal, etc. of the transceiver. Document US 7 475 299 B1 describes alarm generation and alarm clearing in an Ethernet switch or router.

### [SUMMARY OF INVENTION]

The transceiver for the ONU is designed so that an interrupt request (hardware interrupt request (IRQ)) for alarm occurrence is sent to a processor which controls entire ONU.
However, the transceiver is not designed so that an interrupt request for alarm clearing is sent to the processor because
(i) memory size for the diagnostic monitoring parameters due to cost reduction is limited,
(ii) processing performance of a micro controller unit (MCU)in the transceiver due to cost reduction is limited, and
(iii) registers are reserved for customizing transceiver.

An object of the present inventions is to provide a novel and useful method and apparatus of processing for alarm clearing.

According to an aspect of the present invention, there is provided a method of processing for alarm clearing for alarm occurred in an apparatus, as defined by the appended independent claim 1.

According to an other aspect of the present invention, there is provided an apparatus including a CPU and a transceiver, as defined by the appended indepenedent claim 5.

According to the present invention, the current value for the parameter of the alarm is obtained by periodic software polling. Therefore, since the hardware interrupt request is not needed for the alarm clearing, processing performance can be saved for it. In addition, the combination of the hardware interrupt request for the alarm and the software polling for the alarm clearing is used. Accordingly, resources of the processor can be saved.

### [BRIEF DESCRIPTION OF DRAWINGS]

These and other aspects, features and advantages of the present invention will become apparent from the following description in connection with the accompanying drawings in which:
FIG. 1 is a block diagram of a schematic configuration of a passive optical network;
FIG. 2 is a block diagram of showing hardware configurations of an optical network unit according to an embodiment of the present invention;
FIG. 3 describes processes for alarm and alarm clearing according to the embodiment of the present invention;
FIG. 4 is a flowchart of a process for alarm clearing according to the embodiment of the present invention; and
FIGs. 5A to 5C are flowcharts of a process for alarm clearing according to another embodiment of the present invention.

### [DETAILED DESCRIPTION OF THE INVENTION]

Hereinafter, preferred embodiments of the present invention will be described referring to the drawings.

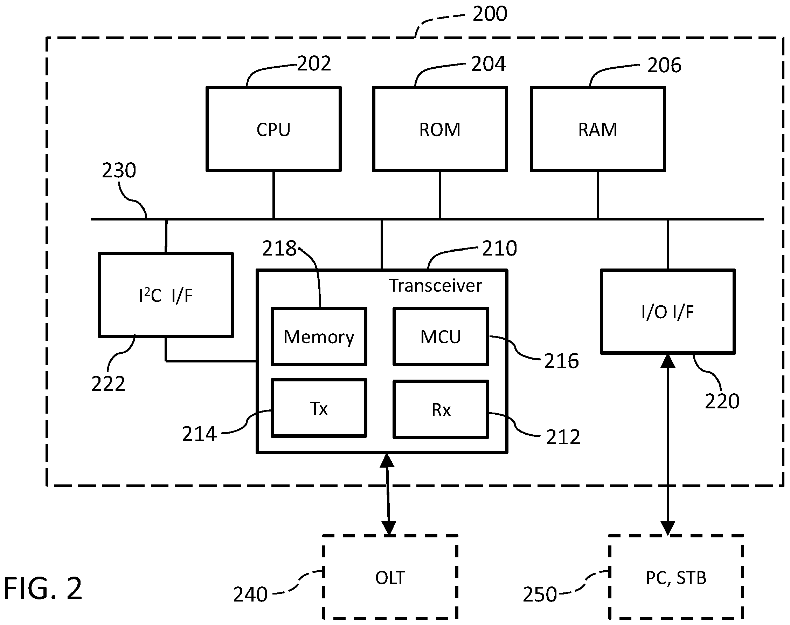

FIG. 2 is a block diagram of showing hardware configurations of an optical network unit according to an embodiment of the present invention. Referring to FIG. 2, an optical network unit (ONU) 200 is provided with an processor (CPU) 202, a ROM 204 , a RAM 206, a transceiver 210, an input/output interface 220, an I²C interface 222, and an bus 230 connecting these elements. The I²C interface 222 is connected to the transceiver 210.

The CPU 202 executes programs, applications, and routines stored in the ROM 204 and RAM 206, and performs processes for alarm and alarm clearing. The CPU 202 starts a predetermined routine corresponding to a hardware interrupt request when the CPU 202 receives the hardware interrupt request. The ROM 204 and RAM 206 store programs, applications, routines, and data for executing processes for alarm and alarm clearing by CPU.

The input/output interface 220 is, for example, Ethernet™, USB, or HDMI™ and is not limited to these interfaces. The input/output interface 220 connects ONU 200 to an external device 250 such as a personal computer or set top box. The ONU 200 can exchange data, video, and audio with the external device 250 via the input/output interface 220. The data is received by ONU 200 from an optical line terminator (OLT) 240 and from the external device 250

The transceiver 210 is provided with a receiver 212, a transmitter 214 , a micro controller unit (MCU) 216, and a memory 218.
The transceiver 210 is coupled to an optical line and communicates with external devices such as an OLT 240 by using the receiver and transmitter. The transceiver 210 sends received data to the input/output interface 220 through the bus 230. The transceiver 210 receives data to be transmitted from the input/output interface 220 through the bus 230.

The transceiver 210 measures and obtains current values (for example, real-time values) for predetermined parameters by using a diagnostic monitoring program running on the MCU 216. The predetermined parameters of the diagnostic monitoring program are for example temperature, supply voltage, received signal strength indication (RSSI) of received optical signal (wave length: 1490 nm, 1555 nm, etc.) etc. of the transceiver. The obtained current values are stored in the memory 218. The memory 218 also stores predetermined threshold values for the parameters at predetermined addresses, respectively. The diagnostic monitoring program raises an alarm or a warning when the current value for the parameter exceeds the corresponding threshold values. A bit at the predetermined address for the parameter in the memory 218 is turned on when the alarm or warning is raised. The transceiver 210 send a hardware interrupt request for the alarm or warning to the CPU 202. The hardware interrupt request is performed by sending a predetermined signal to the CPU202.

The memory 218 is a writable and readable memory, for example Electrically Erasable Programmable Read-Only Memory (EEPROM). The memory 218 has addresses of 0h to 127 h.
The warning information is stored at addresses of 70h and 71h and the alarm information is stored at addresses of 74h and 75h. One of the bits at the addresses of 70h, 71h, 74h, and 75h is turned on, that is, becomes "1" when the alarm or warning is raised. The alarm and warning is hereinafter simply referred to as the "alarm".

The threshold value for each of the predetermined parameters of the diagnostic monitoring program can have both a high threshold value and low threshold value.
The status for the parameter is normal when the current value is between the low threshold value and the high threshold value. The following is that the parameter of the transceiver 210 is temperature as an example. The high threshold value is the threshold value of the high temperature side, for example 60 degrees Celsius. The alarm for the high temperature is generated when the temperature exceeds the high threshold value, for example, when the temperature is 61 degrees Celsius which exceeds 60 degrees Celsius. Then, the bit at the predetermined address of the memory 218 is set "1" from "0" and this indicates abnormal status of the temperature at high temperature side. The low threshold value is the threshold value of the low temperature side, for example -25 degrees Celsius. The alarm for the low temperature is generated when the temperature exceeds the low threshold value, for example, when the temperature is -26 degrees Celsius which exceeds -25 degrees Celsius. Then, the bit at the predetermined address of the memory 218 is set "1" from "0" and this indicates abnormal status of the temperature at low temperature side. It is noted that the threshold can be only the high threshold value or the low threshold value.

The CPU 202 reads the current values and the threshold values for the above mentioned parameters via the I²C interface 222. The CPU 202 reads the current values and the threshold values for the parameters by software polling periodically (for example, at every 5 seconds).

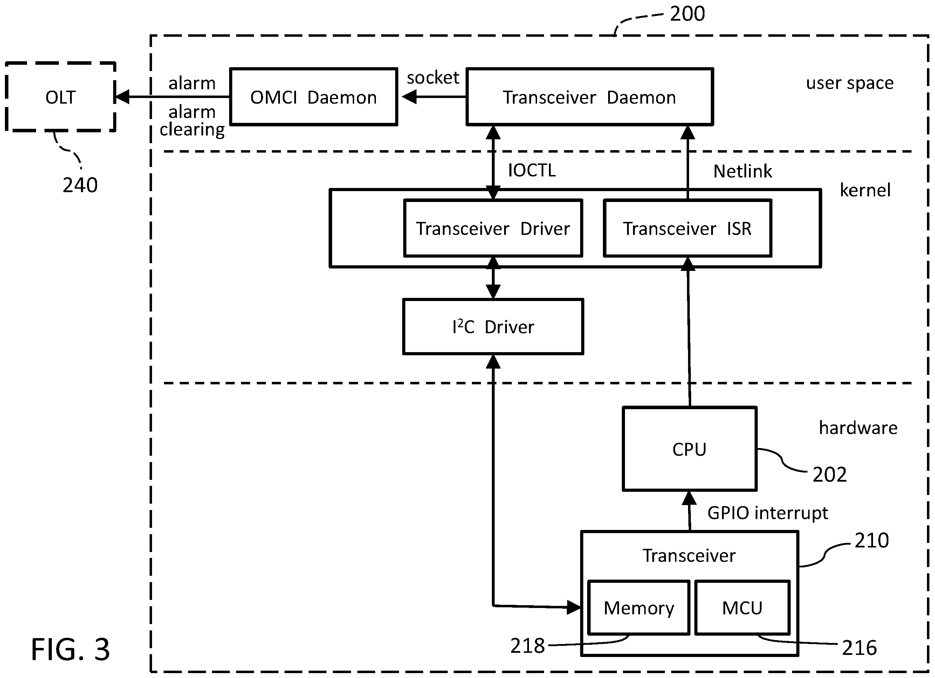

FIG. 3 describes processes for alarm and alarm clearing according to the embodiment of the present invention. First, it is described with the processes when the alarm is raised. Referring to FIG. 3 together with FIG. 2, when the diagnostic monitoring program in the transceiver 210 raises the alarm for one of the parameters, the transceiver send the hardware interrupt request (for example, General Purpose Input/Output (GPIO) Interruput request) associated with the alarm to the CPU 202. The CPU 202 executes, in kernel, an interrupt service routine (ISR) (for example, called "Transceiver ISR") in response to the hardware interrupt request to determine alarm information (for example, name of the alarm), that is, parameter information (for example, name of the parameter). For example, in order to determine the information, the ISR reads data from the addresses of 70h, 71h, 74h, and 75h of the memory of the transceiver. A Transceiver Daemon in user space receives the alarm information (the parameter information) via Netlink from kernel. The Transceiver Daemon generates an alarm message based on the alarm information and sends it to an ONU Management and Control Interface (OMCI) Daemon via a socket. The OMCI Daemon encodes the received alarm message and sends the encoded alarm message to the OLT 240. Accordingly, the OLT can know the alarm occurring and the name of the alarm raised at the ONU 200.

Next, it is described with the processes for the alarm clearing. First, the CPU obtains a current value for the parameter for the alarm raised by software polling periodically. Specifically, the Transceiver Daemon in the user space obtains the current value and the threshold value for the parameter for the alarm stored in the memory 218 of the transceiver 210. The obtaining of the value is performed by a Transceiver Driver and I²C driver via the I²C interface 222. Second, the Transceiver Daemon compares the current value with the threshold value. When the current value turns back to a normal value (that is, the current value becomes within the threshold value), the Transceiver Daemon generates an alarm clearing message and sends to the OMCI Daemon. The OMCI Daemon encodes the received alarm clearing message and sends the encoded alarm clearing message to the OLT 240. Accordingly, the OLT can know the alarm clearing and the name of the alarm for the alarm clearing at the ONU 200.

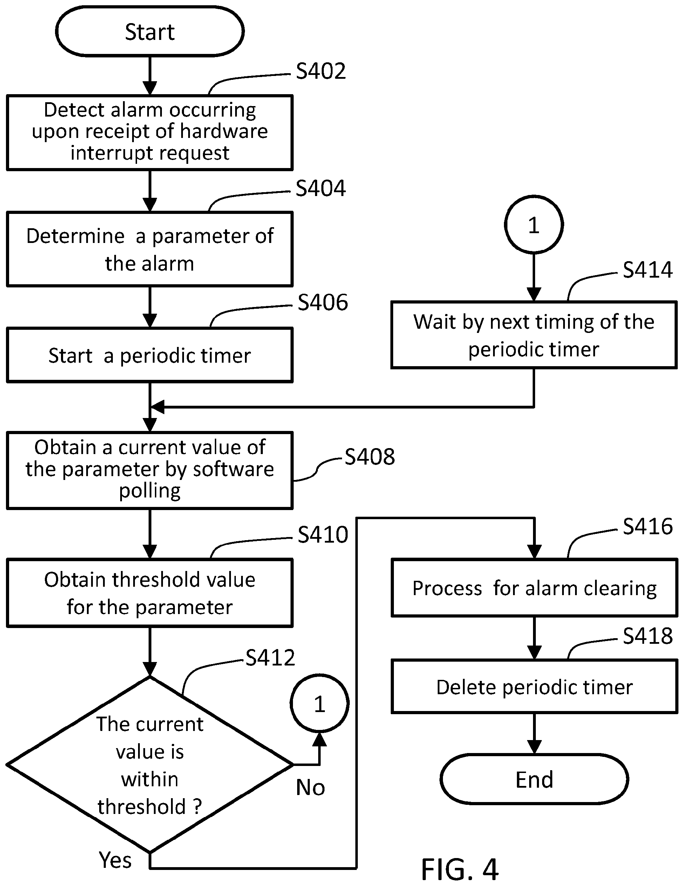

FIG. 4 is a flowchart of the process for alarm clearing according to the embodiment of the present invention. It is assumed that the ONU 200 (shown in FIG. 2) is running in the process according to the embodiment of the present invention.

Referring to FIG. 4 together with FIGs. 2 and 3, in step S402, the CPU 202 detects the alarm occurring upon the receipt of the hardware interrupt request from the transceiver 210. For example, as described in FIG. 3, this detection can be performed by the Transceiver Damon receiving the alarm information.

Next, in step S404, the CPU 202 determines the detected parameter for the alarm. For example, as described in FIG. 3, the Transceiver Daemon determines it from the alarm message.

Next, in step S406, the CPU 202 starts a periodic timer for executing steps S408 to S412 periodically.

Next, in step S408, the CPU 202 obtains a current value for the determined parameter in step S404 from the memory 218 of the transceiver by software polling via the I²C interface 222. Specifically, the CPU 202 specifies the address of the memory for the current value of the parameter and reads the current value stored in the address.

Next, in step S410, the CPU 202 obtains a threshold value for the determined parameter in step S404 from the memory 218 of the transceiver by software polling via the I²C interface 222. Specifically, the CPU 202 specifies the address of the memory for the threshold value for the parameter and reads the threshold value stored in the address.

Next, in step S412, the CPU 202 determines whether the current value is within the threshold value. That is, the CPU 202 determines whether the current value have turned back to the normal value. If this determination is "No", the process goes to step S414, and if this determination is "Yes", the process goes to step S416.

In step S414, the CPU 202 waits by the next timing of the periodic timer. Since the CPU 202 wait for the period of the periodic timer, this prevents from frequent access to the memory 214 of the transceiver 210. At the next timing, the process goes to step S408 and steps S408 to S412 are performed as explained above.

In step S416, the CPU 202 processes for the alarm clearing. This step may include the steps of generating an alarm clearing message, encoding the generated alarm clearing message, and sending the encoded alarm clearing message to OLT 240.

Next, in step S418, the CPU deletes the timer. Then, the process is ended.

According to the embodiment of the present invention, the CPU202 obtains the current value for the parameter of the alarm by periodic software polling. Accordingly, since the transceiver does not use the scheme of the hardware interrupt request for the alarm clearing, the MCU 216 of the transceiver 210 can be saved for it. As the result, the cost of the transceiver can be saved. In addition, the combination of the hardware interrupt request for the alarm and the software polling for the alarm clearing is used. Accordingly, the resources of the CPU 202 can be saved. Moreover, the CPU 202 accesses the memory 218 of the transceiver 210 for the process of the alarm clearing, whereas the CPU 202 does not access the memory 218 for the process of the alarm occurring. Accordingly, this can reduce frequency of accessing the memory 218. This can prevent from aging of a chipset including the memory 218 of the transceiver 210.

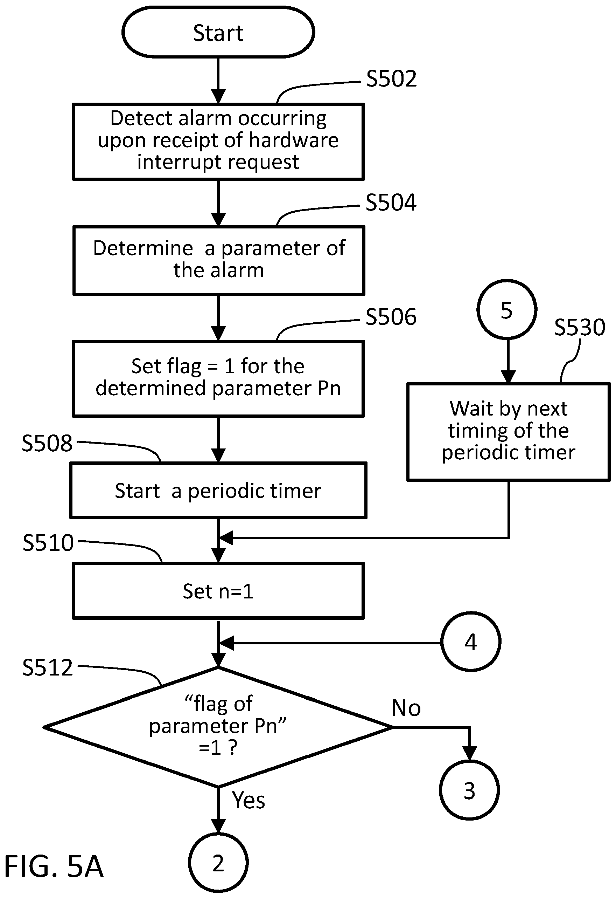

FIGs. 5A to 5C are flowcharts of a process for alarm clearing according to another embodiment of the present invention. It is assumed that the ONU 200 (shown in FIG. 2) is running in the process according to the embodiment of the present invention. It is noted that this embodiment will be described using FIGs 5A to 5C in addition to FIGs. 2 and 3.

Referring to FIG. 5A, in step S502, the CPU 202 detects the alarm occurring upon the receipt of the hardware interrupt request from the transceiver 210. For example, as described in FIG. 3, this detection can be performed by the Transceiver Damon receiving the alarm information.

Next, in step S504, the CPU 202 determines the detected parameter for the alarm. For example, as described in FIG. 3, the Transceiver Daemon determines it from the alarm message.

Next, in step S506, the CPU 202 set a flag for the determined parameter Pn for "1". For example, if the total number of the parameters for diagnostic monitoring program is 8 (that is, n= 1 to 8), there are P1 to P8 as the parameters. The flag for each of the parameters is set for "1" when the alarm occurring and "0" when no alarm occurring. The above steps from steps S502 to S506 are always performed while the ONU 200 is running. When at least one flag is set for "1", the process goes to step S508.

Next, in step S508, the CPU 202 starts a periodic timer for executing steps S510 and the following steps periodically.

Next, in step S510, the CPU sets n for 1 (that is, n=1).

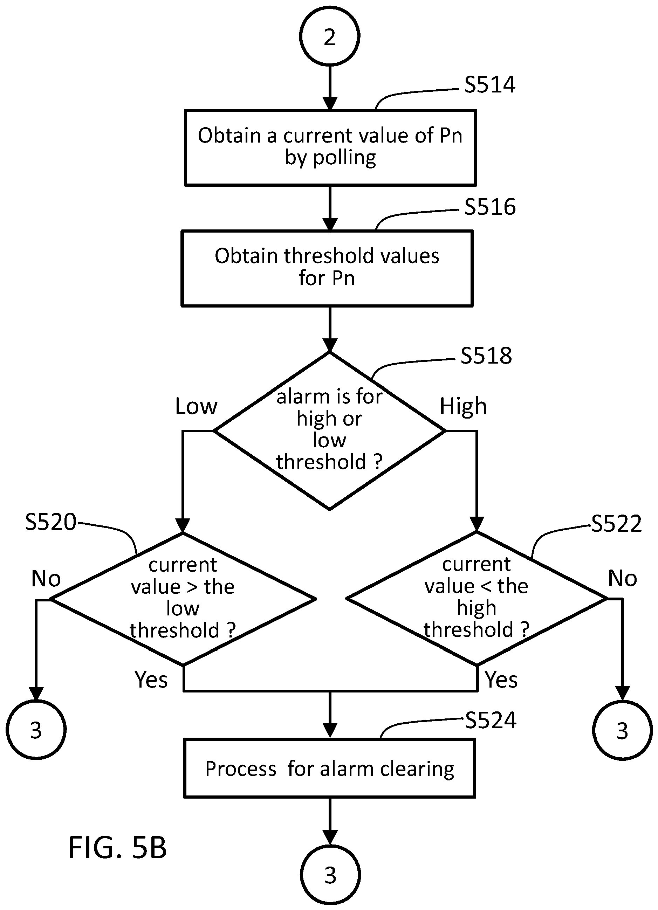

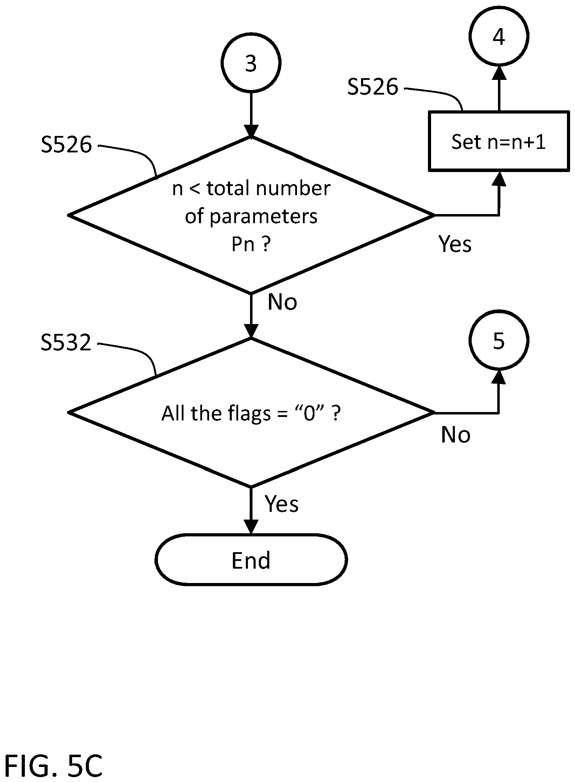

Next, in step S504, the CPU determines whether the flag of the parameter Pn is "1". If this determination is "Yes", the process goes to step S514 (in FIG. 5B), and if this determination is "No", the process goes to step S526 (in FIG. 5C).

Referring to FIG. 5B, in step S514, the CPU 202 obtains a current value for the parameter Pn from the memory 218 of the transceiver by software polling via the I²C interface 222. Specifically, the CPU 202 specifies the address of the memory for the current value of the parameter Pn and reads the current value stored in the address.

Next, in step S516, the CPU 202 obtains a threshold value for the parameter Pn from the memory 218 of the transceiver via the I²C interface 222. Specifically, the CPU 202 specifies the address of the memory for the threshold value for the parameter Pn and reads the threshold value stored in the address. If there are a high threshold value and low threshold value, the CPU 202 obtains the both.

Next, in step S518, the CPU 202 determines which the alarm is for the high threshold value or the low threshold value. If this determination is "the low threshold value", the process goes to step S520, and if this determination is "the high threshold value", the process goes to step S522.

In step S520, the CPU 202 determines whether the current value is higher than the low threshold value for the parameter Pn. That is, the CPU 202 determines whether the current value have turned back to the normal value. If this determination is "Yes", the process goes to step S524, and if this determination is "No", the process goes to step S526 (in FIG. 5C).

In step S522, the CPU 202 determines whether the current value is lower than the high threshold value for the parameter Pn. That is, the CPU 202 determines whether the current value have turned back to the normal value. If this determination is "Yes", the process goes to step S524, and if this determination is "No", the process goes to step S526 (in FIG. 5C).

In step S526, the CPU 202 processes for the alarm clearing for the parameter Pn. This step may include the steps of generating an alarm clearing message, encoding the generated alarm clearing message, and sending the encoded alarm clearing message to OLT 240.

Referring to FIG. 5C, next, in step S526, the CPU 202 determines whether "n" is less than the total number of the parameters Pn. If this determination is "Yes", the process goes to step S528, and if this determination is "No", the process goes to step S532. Accordingly, the process of steps S512 to S526 is performed depending on the determination steps for all the parameters.

In step S528, the CPU 202 add "1" to "n" (that is, n=n+1). The process goes to Step 512 (in FIG. 5A) and repeat steps S512 to S526 until "n" reaches the total number of the parameters Pn.

In step S532, the CPU 202 determines whether all the flags for the parameters are "0". If this determination is "Yes", the process is ended, and if this determination is "No", the process goes to step S530 shown in FIG. 5A.

Retuning to FIG. 5A, in step S530, the CPU 202 waits by the next timing of the periodic timer. Since the CPU 202 wait for the period of the periodic timer, this prevents from frequent access to the memory 214 of the transceiver 210. At the next timing, the process goes to step S512. Accordingly, if there is a parameter for which the alarm is not cleared, the CPU 202 can process for the alarm clearing for such parameter by software polling periodically.

According to the embodiment of the present invention, there is a plurality of parameters of the diagnostic monitoring program and the CPU 202 uses the flags for the parameters for indicating the alarm occurring. Accordingly, the CPU 202 can easily determine the parameters whose alarm is occurring. Moreover this can reduce frequency of the access to the memory 218 by the CPU 202. This can prevent from aging of a chipset including the memory 218 of the transceiver 210. In addition, the embodiment has the works and the effects described in the previous embodiment.

## Claims

1. A method of processing for alarm clearing for alarm occurred in an apparatus having a processor and a transceiver, **characterized by** comprising, at the processor:
(a) receiving a hardware interrupt request for an alarm occurring from the transceiver when a parameter associated with the transceiver for the alarm exceeds a threshold value (S402, S502);
(b) determining the parameter for the alarm (S404, S504);
(c) obtaining a current value of the parameter from the transceiver by software polling (S408, S514);
(d) obtaining the threshold value for the parameter from the transceiver by software polling (S410, S516);
(e) determining whether the current value is below the threshold value (S412, S520, S522); and
(f) processing an alarm clearing for the alarm when the current value is below the threshold value (S416, S524).

2. The method according to Claim 1, further comprising the steps of:
(b1) setting a flag for the determined parameter (S506); and
(b2) determining alarm occurring based on a value of the flag (S512).

3. The method according to Claim 1 or 2, wherein the steps (c) to (e) are performed periodically until the alarm clearing for the alarm is performed.

4. The method according to any of Claims 1 to 3, wherein
the apparatus is an optical network unit and the alarm is for a transceiver, and wherein
the step (a) further comprises the step of generating a message of the alarm and sending the message to an optical line terminator coupled with an optical line; and
the step (f) includes the step of generating a message of an alarm clearing and sending the message to the optical line terminator.

5. An apparatus comprising:
a CPU (202) and
a transceiver (210) for sending a hardware interrupt request for an alarm to the CPU when a parameter associated with the transceiver for the alarm exceeds a threshold value, **characterized in that** the CPU is configured to perform:
determining the parameter for the alarm;
obtaining a current value of the parameter from the transceiver by software polling;
obtaining the threshold value for the parameter by software polling;
determining whether the current value is below the threshold value; and
processing an alarm clearing for the alarm when the current value is below the threshold value.

6. The apparatus according to Claim 5, wherein the CPU is further configured to perform:
setting a flag for the determined parameter; and
determining alarm occurring based on a value of the flag.

7. The apparatus according to Claim 5 or 6, wherein
the apparatus is an optical network unit that can be coupled with an optical line, and wherein the CPU is further configured for generating a message of the alarm and sending the message to an optical line terminator coupled with an optical line, and generating a message of an alarm clearing and sending the message to the optical line terminator coupled with the optical line.

8. The apparatus according to claim 5 or 6, wherein the CPU is configured to perform following until the alarm clearing for the alarm is performed:
obtaining the current value of the parameter from the transceiver by software polling;
obtaining the threshold value for the parameter by software polling;
determining whether the current value is below the threshold value; and
processing the alarm clearing for the alarm when the current value is below the threshold value.

## Patentansprüche

1. Verfahren zum Verarbeiten für eine Alarmlöschung für einen Alarm, der in einer Vorrichtung mit einem Prozessor und mit einem Transceiver aufgetreten ist, **dadurch gekennzeichnet, dass** das Verfahren bei dem Prozessor umfasst:
(a) Empfangen einer Hardwareunterbrechungsanforderung für einen auftretenden Alarm von dem Transceiver, wenn ein dem Transceiver zugeordneter Parameter für den Alarm einen Schwellenwert übersteigt (S402, S502);
(b) Bestimmen des Parameters für den Alarm (S404, S504);
(c) Erhalten eines aktuellen Werts des Parameters von dem Transceiver durch Softwareabruf (S408, S514);
(d) Erhalten des Schwellenwerts für den Parameter von dem Transceiver durch Softwareabruf (S410, S516);
(e) Bestimmen, ob der aktuelle Wert unter dem Schwellenwert liegt (S412, S520, S522); und
(f) Verarbeiten einer Alarmlöschung für den Alarm, wenn der aktuelle Wert unter dem Schwellenwert liegt (S416, S524).

2. Verfahren nach Anspruch 1, das ferner die folgenden Schritte umfasst:
(b1) Einstellen eines Merkers für den vorgegebenen Parameter (S506); und
(b2) Bestimmen, dass ein Alarm auftritt, auf der Grundlage eines Werts des Merkers (S512).

3. Verfahren nach Anspruch 1 oder 2, wobei die Schritte (c) bis (e) periodisch ausgeführt werden, bis die Alarmlöschung für den Alarm ausgeführt wird.

4. Verfahren nach einem der Ansprüche 1 bis 3, wobei
die Vorrichtung eine optische Netzabschlusseinheit ist und der Alarm für einen Transceiver ist und wobei der Schritt (a) ferner den Schritt des Erzeugens einer Nachricht des Alarms und des Sendens der Nachricht an einen optischen Leitungsabschluss, der mit einer optischen Leitung gekoppelt ist, umfasst; und
der Schritt (f) den Schritt des Erzeugens einer Nachricht einer Alarmlöschung und des Sendens der Nachricht an den optischen Leitungsabschluss enthält.

5. Vorrichtung, die umfasst:
eine CPU (202) und
einen Transceiver (210) zum Senden einer Hardwareunterbrechungsanforderung für einen Alarm an die CPU, wenn ein dem Transceiver für den Alarm zugeordneter Parameter einen Schwellenwert übersteigt, **dadurch gekennzeichnet, dass** die CPU dafür konfiguriert ist,
Folgendes auszuführen:
Bestimmen des Parameters für den Alarm;
Erhalten eines aktuellen Werts des Parameters von dem Transceiver durch Softwareabruf;
Erhalten des Schwellenwerts für den Parameter durch Softwareabruf;
Bestimmen, ob der aktuelle Wert unter dem Schwellenwert liegt; und
Verarbeiten einer Alarmlöschung für den Alarm, wenn der aktuelle Wert unter dem Schwellenwert liegt.

6. Vorrichtung nach Anspruch 5, wobei die CPU ferner dafür konfiguriert ist, Folgendes auszuführen:
Einstellen eines Merkers für den bestimmten Parameter; und
Bestimmen, dass ein Alarm auftritt, auf der Grundlage eines Werts des Merkers.

7. Vorrichtung nach Anspruch 5 oder 6, wobei die Vorrichtung eine optische Netzabschlusseinheit ist, die mit einer optischen Leitung gekoppelt werden kann, und wobei die CPU ferner dafür konfiguriert ist, eine Nachricht des Alarms zu erzeugen und die Nachricht an einen optischen Leitungsabschluss, der mit einer optischen Leitung gekoppelt ist, zu senden und eine Nachricht einer Alarmlöschung zu erzeugen und die Nachricht an den optischen Leitungsabschluss, der mit der optischen Leitung gekoppelt ist, zu senden.

8. Vorrichtung nach Anspruch 5 oder 6, wobei die CPU dafür konfiguriert ist, Folgendes auszuführen, bis die Alarmlöschung für den Alarm ausgeführt wird:
Erhalten des aktuellen Werts des Parameters von dem Transceiver durch Softwareabruf;
Erhalten des Schwellenwerts für den Parameter durch Softwareabruf;
Bestimmen, ob der aktuelle Wert unter dem Schwellenwert liegt; und
Verarbeiten der Alarmlöschung für den Alarm, wenn der aktuelle Wert unter dem Schwellenwert liegt.

## Revendications

1. Procédé de traitement pour suppression d'alarme pour une alarme déclenchée dans un appareil ayant un processeur et un émetteur-récepteur, **caractérisé en ce qu'**il comprend, au niveau du processeur, les étapes consistant à :
(a) recevoir une requête d'interruption matérielle pour un déclenchement d'alarme de l'émetteur-récepteur lorsqu'un paramètre associé à l'émetteur-récepteur pour l'alarme dépasse une valeur seuil (S402, S502) ;
(b) déterminer le paramètre pour l'alarme (S404, S504);
(c) obtenir une valeur courante du paramètre à partir de l'émetteur-récepteur par interrogation logicielle (S408, S514);
(d) obtenir la valeur seuil pour le paramètre à partir de l'émetteur-récepteur par interrogation logicielle (S410, S516);
(e) déterminer si la valeur courante est inférieure à la valeur seuil (S412, S520, S522) ; et
(f) effectuer un traitement pour suppression d'alarme pour l'alarme lorsque la valeur courante est inférieure à la valeur seuil (S416, S524).

2. Procédé selon la revendication 1, comprenant en outre les étapes consistant à :
(b1) définir un indicateur pour le paramètre déterminé (S506); et
(b2) déterminer le déclenchement d'alarme en fonction de la valeur de l'indicateur (S512).

3. Procédé selon la revendication 1 ou 2, dans lequel les étapes (c) à (e) sont effectuées périodiquement jusqu'à ce que la suppression d'alarme pour l'alarme soit effectuée.

4. Procédé selon l'une des revendications 1 à 3, dans lequel l'appareil est une unité de réseau optique et l'alarme est pour un émetteur-récepteur, et dans lequel l'étape (a) comprend en outre l'étape consistant à générer un message de l'alarme et à envoyer le message à une terminaison de ligne optique couplée à une ligne optique, et
l'étape (f) inclut l'étape consistant à générer un message de suppression d'alarme et à envoyer le message à une terminaison de ligne optique.

5. Appareil comprenant :
un CPU (202) et
un émetteur-récepteur (210) pour envoyer une requête d'interruption matérielle pour une alarme au CPU lorsqu'un paramètre associé à l'émetteur-récepteur pour l'alarme dépasse une valeur seuil, **caractérisé en ce que** le CPU est configuré pour :
déterminer le paramètre pour l'alarme ;
obtenir une valeur courante du paramètre à partir de l'émetteur-récepteur par interrogation logicielle ;
obtenir la valeur seuil pour le paramètre par interrogation logicielle ;
déterminer si la valeur courante est inférieure à la valeur seuil ; et
effectuer un traitement pour suppression d'alarme pour l'alarme lorsque la valeur courante est inférieure à la valeur seuil.

6. Appareil selon la revendication 5, dans lequel le CPU est en outre configuré pour :
définir un indicateur pour le paramètre déterminé ; et
déterminer le déclenchement d'alarme en fonction de la valeur de l'indicateur.

7. Appareil selon la revendication 5 ou 6, dans lequel l'appareil est une unité de réseau optique qui peut être couplée à une ligne optique, et dans lequel le CPU est en outre configuré pour générer un message de l'alarme et pour envoyer le message à une terminaison de ligne optique couplée à une ligne optique, et générer un message de suppression d'alarme et envoyer le message à la terminaison de ligne optique couplée à la ligne optique.

8. Appareil selon la revendication 5 ou 6, dans lequel le CPU est configuré pour effectuer les tâches suivantes jusqu'à ce que la suppression d'alarme pour l'alarme soit effectuée :
obtenir la valeur courante du paramètre à partir de l'émetteur-récepteur par interrogation logicielle ;
obtenir la valeur seuil pour le paramètre par interrogation logicielle ;
déterminer si la valeur courante est inférieure à la valeur seuil ; et
effectuer la suppression d'alarme pour l'alarme lorsque la valeur courante est inférieure à la valeur seuil.
